# EUROPEAN PATENT SPECIFICATION

(11) **EP 2 299 682 B1**
(45) Date of publication and mention of the grant of the patent: **24.10.2012**
(21) Application number: 10176785.3
(22) Date of filing: 15.09.2010
(51) Int. Cl.: H04N 1/44

(54) **Document processing device, server device, and document processing system**
Dokumentverarbeitungsvorrichtung, Servervorrichtung und Dokumentverarbeitungssystem
Dispositif de traitement de document, dispositif de serveur et système de traitement de document

(30) Priority: 17.09.2009 JP 2009215893
(43) Date of publication of application: 23.03.2011
(73) Proprietor: Konica Minolta Business Technologies, Inc., Chiyoda-ku Tokyo 100-0005 (JP)
(72) Inventor: Kawabata, Hiroyuki, Tokyo 100-0005 (JP)
(74) Representative: HOFFMANN EITLE

(56) References cited:
- JP-A- 2009 004 914
- US-A1- 2002 194 228
- US-A1- 2008 046 720

## Description

### TECHNICAL FIELD OF INVENTION

The present invention relates to a document processing device, a server device, and a document processing system. The present invention more specifically relates to a technique of downloading through a network a program used for processing document data.

### BACKGROUND ART

A document processing device, such as a complex device or a MFP (Multi Function Peripheral) that processes document data is currently connected to a network and is allowed to use services provided by a device such as a web server device connected to the network.

Widely known conventional technique for determining whether a processing for realizing a service provided by a server device is executed in a MFP or in the server device in the structure that the MFP and the server device are connected through a network is disclosed for example in Japanese Patent Application Laid-Open No. JP2009-4914 A. According to this disclosed technique, when the MFP executes the processing therein, the MFP downloads an application program used for execution of the processing from the server device.

According to the document device such as the MFP described above, in order to enhance user's operability for use of a service provided by the web server, an operation key corresponding to the service is generally displayed on an operational panel of the MFP. In this case, the user makes operation of the operation key displayed on the operational panel. In response to the user's operation, for example document data to be processed is transmitted to the web server device, and the document data is processed in accordance with a predetermined document processing in the web server device. So, the user is allowed to use the service provided by the web server. The web server device performs billing processing therein every time providing a service.

The web server device mentioned above is sometimes built in an intranet in a company, but is sometimes built on the internet outside the company. When the web server device is built on an internet outside the company, the user who uses the document processing device is not possible to recognize whether a processing corresponding to the operation key is executed in the document processing device, in the web server device built in the intranet, or the web server device built on the internet with just viewing the operational panel. Therefore, when, for instance, the user makes operation of the operation key without discretion to have a confidential document to be processed, the confidential document is revealed on the internet in some cases. It brings serious security problems.

In order to solve the security problems described above, in the above conventional technique, for example, the service provided by the web server device is used by downloading a document processing program from the web server device. In this case, however, once the document processing device downloads the document processing program from the web server device, the downloaded document processing program is allowed unrestricted execution in the document processing device. The web server device cannot perform billing processing for each provision of the service therein as well as for the conventional technique. In such case, the web server device needs to charge a price based on the assumption that the document processing program is to be executed without limited number of times. That leads the charge high price, and the number of users of the service is reduced.

### TECHNICAL PROBLEM AND ITS SOLUTION

The present invention has been made to solve the above-described problems. It is an object of the present invention to provide a document processing device, a server device, and a document processing system that achieve following objectives when at least one service provided by a web server device is used in the document processing device. The first objective is to prevent information such as confidential information from being revealed, and the second objective is to allow the web server device to perform billing processing for each provision of the service.

First, the present invention is directed to a document processing device downloads a document processing program from a server device through a network and executes the document processing program, thereby processing document data to be processed.

According to one aspect of the document processing device, the device comprises: an identification information generating part for generating identification information for identifying the document data to be processed based on the document data; a program acquiring part for transmitting the identification information to the server device, and downloading the document processing program capable of processing only the document data that corresponds to the identification information from the server device; and a program executing part for processing the document data to be processed by executing the document processing program acquired by the program acquiring part.

Second, the present invention is directed to a server device transmits a document processing program in response to a request for transmission received from a document processing device with which connected through a network.

According to one aspect of the server device, the server device comprises; a program execution restricting part for creating the document processing program capable of processing only document data to be processed that corresponds to identification information for identifying the document data based on the identification information included in the request for transmission; and a program transmitting part for transmitting the document processing program created by the program execution restricting part to the document processing device.

Third, the present invention is directed to a document processing system comprises a document processing device and a server device being connected through a network. In this document processing system, the document processing device downloads a document processing program from the server device, and executes said downloaded document processing program, thereby processing document data to be processed.

According to one aspect of the document processing system, the document processing device in the document processing system includes: an identification information generating part for generating identification information for identifying the document data to be processed based on the document data; a program acquiring part for transmitting a request for transmission including the identification information to the server device, and receiving the document processing program capable of processing only the document data that corresponds to the identification information from the server device; and a program executing part for processing the document data to be processed by executing the document processing program acquired by the program acquiring part. Further, the server device includes: a program execution restricting part for creating the document processing program capable of processing only document data that corresponds to the identification information based on the identification information included in the request for transmission; and a program transmitting part for transmitting the document processing program created by the program execution restricting part to the document processing device.

### BRIEF DESCRIPTION OF DRAWINGS

Fig. 1 shows an exemplary configuration of a document processing system of a first preferred embodiment of the present invention;
Fig. 2 is a block diagram showing an exemplary hardware configuration of an image processing device;
Fig. 3 is a block diagram showing an exemplary hardware configuration of a web server device;
Fig. 4 shows an example of a screen displayed on a display unit of an operational panel in the image processing device;
Figs. 5A and 5B each show an exemplary data communication between the image processing device and the web server device when the image processing device executes document processing using a service of the web server device;
Fig. 6 is an example of document information;
Fig. 7 is a block diagram showing a functional configuration of a CPU for processing confidential document in the image processing device;
Fig. 8 is a block diagram showing an exemplary functional configuration of the CPU when a document processing program with execution restriction is created in the web server device;
Fig. 9 is a flow diagram explaining an exemplary procedure of the image processing device;
Fig. 10 is a flow diagram explaining an exemplary procedure of processing in the web server device;
Fig. 11 is a flow diagram explaining in detail an exemplary procedure of a processing to set execution restriction;
Fig. 12 shows an exemplary configuration of the document processing system of a second preferred embodiment of the present invention;
Fig. 13 shows an exemplary data communication among the image processing device, a relay server device and the web server device when the image processing device executes document processing using the service of the web server device in the second preferred embodiment;
Fig. 14 is an example of an initial screen displayed on the display unit of the operational panel in the image processing device of a third preferred embodiment;
Fig. 15 shows an exemplary data communication between the image processing device and the web server device when the image processing device acquires billing information from the web server device in the third preferred embodiment.

### EMBODIMENTS OF INVENTION

Preferred embodiments of the present invention are described in detail below with reference to figures. In the description given below, those elements which are shared in common among the preferred embodiments are represented by the same reference numerals, and these elements are not discussed repeatedly for the same description.

### (First Preferred Embodiment)

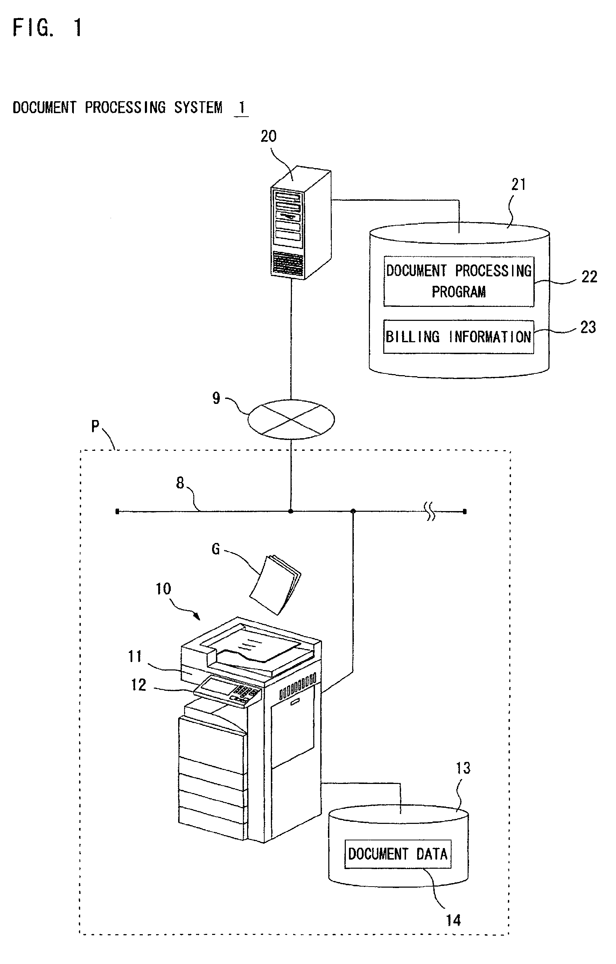

Fig. 1 shows an exemplary configuration of a document processing system 1 of a first preferred embodiment of the present invention. The document processing system 1 includes a network structure in which an intranet 8 developed, for example, in certain environment P such as in a company and an internet 9 built outside the certain environment P are connected to each other. The intranet 8 is a network for example consisted of LAN. An image processing device 10 identified by a name such as a complex device or a MFP (Multi Function Peripheral) is connected to the intranet 8. A web server device 20 is connected to the internet 9. The image processing device 10 and the web server device 20 are allowed to make data communication therebetween through the intranet 8 and the internet 9.

The image processing device 10 of the first preferred embodiment has functions as that of a document processing device. The image processing device 10 includes a scanner unit 11 for optically reading a document G and generating document data, an operational panel 12 which works as a user interface when a user uses the image processing device 10, and a storage device 13 formed from a storage device such as a hard disk drive. The storage device 13 is capable of storing therein document data 14 such as that generated by reading the document G by the scanner unit 11 and that received from another device (for example, a computer) through the intranet 8. In order to process the document data 14 generated by reading the document G by the scanner unit 11 or the document data 14 already stored in the storage device 13 in accordance with the predetermined document processing, the image processing device 10 is allowed to use at least one service related to document processing provided by the web server device 20 through the intranet 8 and the internet 9.

The web server device 20 is a server device which provides the service related to document processing through the internet 9. The web server device 20 includes a storage device 21 formed from a storage device such as a hard disk drive. The storage device 21 stores therein a document processing program 22 for providing the service related to document processing and billing information 23 used for determination of a price to charge in response to the provided service. The document processing program 22, for example, is a program for processing such as OCR (Optical Character Reader) processing, translation processing, image processing and others with the input document data.

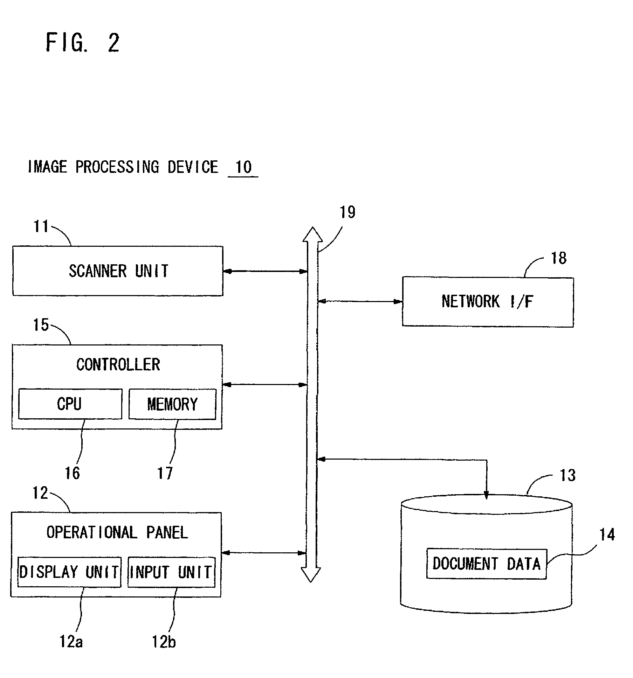

Fig. 2 is a block diagram showing an exemplary hardware configuration of the image processing device 10. The image processing device 10 includes, in addition to the scanner unit 11, the operational panel 12 and the storage device 13 already described, a controller 15 and a network interface 18. Each of those parts is connected to each other through a data bus 19 in a manner that allows input and output of data therebetween.

The operational panel 12 includes a display unit 12a and an input unit 12b. The display unit 12a is formed from a device such as a liquid crystal display on which various types of information are displayed to a user who uses the image processing device 10. The input unit 12b is formed with a plurality of operation keys with which the user makes entries of various types of instructions for using the image processing device 10. The operation keys constituting the input unit 12b include both touch panel keys arranged on the screen of the display unit 12a, and push-button keys including keys such as numerical keypad and a start key arranged around the display unit 12a. The network interface 18 connects the image processing device 10 to the intranet 8.

The controller 15 controls each part of the image processing device 10. The controller 15 includes a CPU 16 and a memory 17. The CPU 16 reads and executes a certain program used for an image processing device which is not shown in Fig. 2, thereby controlling each part and realizing variety of functions as the image processing device 10. Especially when instructions to use the service related to document processing provided by the web server device 20 is given by a user, the controller 15 makes data communication with the web server device 20 through the network interface 18. The controller 15 then controls movement of each part so that the document data to be processed specified by the user is subjected to the predetermined document processing. The memory 17 stores data therein such as temporary data when the CPU 16 executes various types of processing.

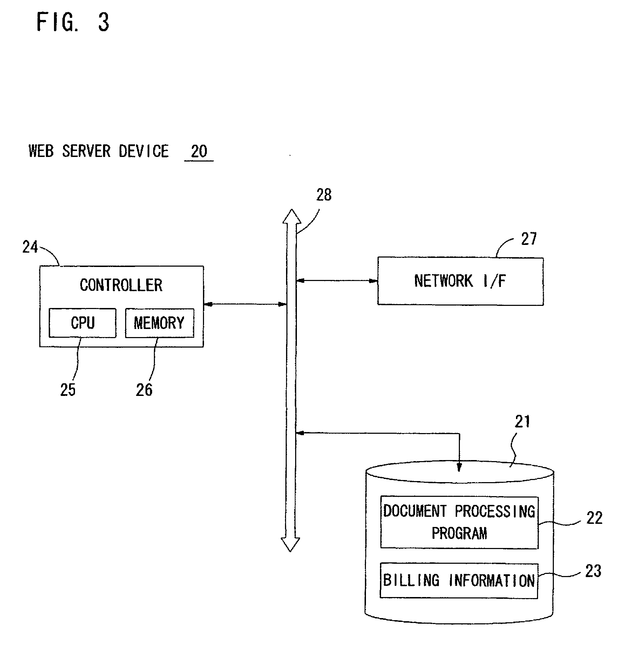

Fig. 3 is a block diagram showing an exemplary hardware configuration of the web server device 20. The web server device 20 includes in addition to the storage device 21 a, controller 24 and a network interface 27. Each part is allowed to input and output data with each other through a data bus 28. The network interface 27 connects the web server device 20 to the internet 9.

The controller 24 is responsible for controlling each part of the web server device 20, and for executing processing to provide the service related to document processing through the internet 9. The controller 24 includes a CPU 25 and a memory 26. The CPU 25 reads and executes a certain program used for a server which is not shown in Fig. 3, so that the CPU 25 becomes operative to control each part, and realizes variety of functions as the web server device 20. Especially when receiving a request from the image processing device 10 through the internet 9, the controller 24 executes processing in response to the detail of the request, thereby providing the service. After providing the service, the controller 24 refers to the billing information 23, and determines a price to charge based on the detail of the provided service. The controller 24 then performs billing processing to charge the image processing device 10 or a user of the image processing device 10. The memory 26 stores data therein such as temporary data when the CPU 25 executes various types of processing.

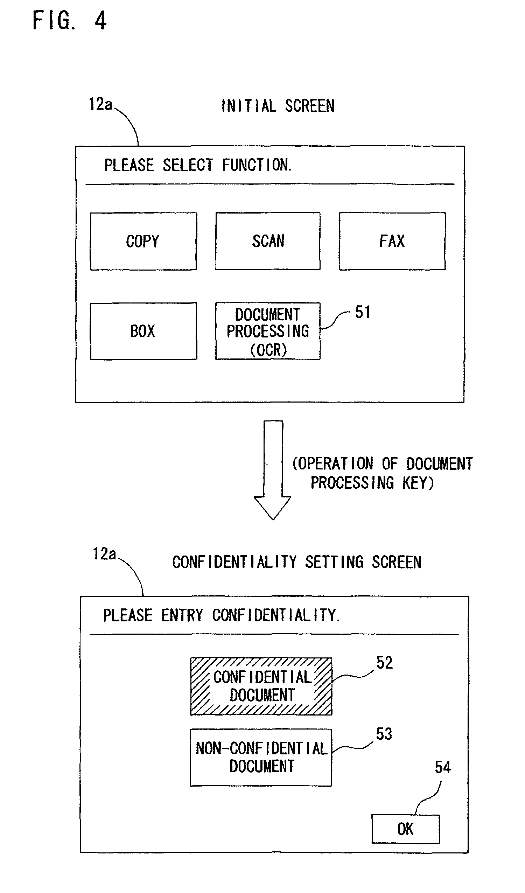

Next, the sequence of operation for a user to make operation of the image processing device 10 for execution of document processing is explained. Fig. 4 shows an example of a screen displayed on the display unit 12a of the operational panel 12 in the image processing device 10. While, for example, the image processing device 10 is in an initial state after being turned on, an initial screen shown in Fig. 4 is displayed on the display unit 12a of the operational panel 12. On the initial screen, multiple operation keys through which users may select and operate are shown. These multiple operation keys correspond to respective functions available with the image processing device 10. A document processing key 51 corresponds to a function to process document data using the service provided by the web server device 20 such as that to execute OCR processing. When the user would like a desired document to be processed in accordance with document processing such as OCR processing, he or she makes operation of the document processing key 51 displayed on the operational panel 12. The document processing key 51 displayed on the operational panel 12 does not specify that the key corresponds to a function of the web server device 20. Therefore, the user makes operation of the document processing key 51 without considering the document processing such as OCR processing is to be executed in the image processing device 10 or in another device.

In response to the user's operation to select the document processing key 51, the screen displayed on the operational panel 12 changes from the initial screen to a confidentiality setting screen in Fig. 4. The user sets whether or not the document data to be processed is a confidential document on the confidentiality setting screen. By way of example, as shown in Fig. 4, a confidential document key 52 to be selected when the document data is confidential and a non-confidential key 53 to be selected when the document data is not confidential are shown on the confidentiality setting screen. The user who sees the screen determines whether or not the document data is confidential document based on the contents of the document to be processed, and makes operation of either the confidential document key 52 or the non-confidential key 53. The example in Fig. 4 shows that the confidential document key 52 is selected and the document data to be processed is designated as confidential document. After the confidential setting, the user makes operation of an ok key 54. The screen changes to next one on which, for example, the document data to be processed is specified. So, document data generated by reading the document G by the scanner unit 11 or the document data 14 already stored in the storage device 13 may be specified as the document data to be processed. The user makes operation of keys such as a start key, thereby giving instructions for execution of a job. In response to the instructions, the image processing device 10 starts processing to process specified document data.

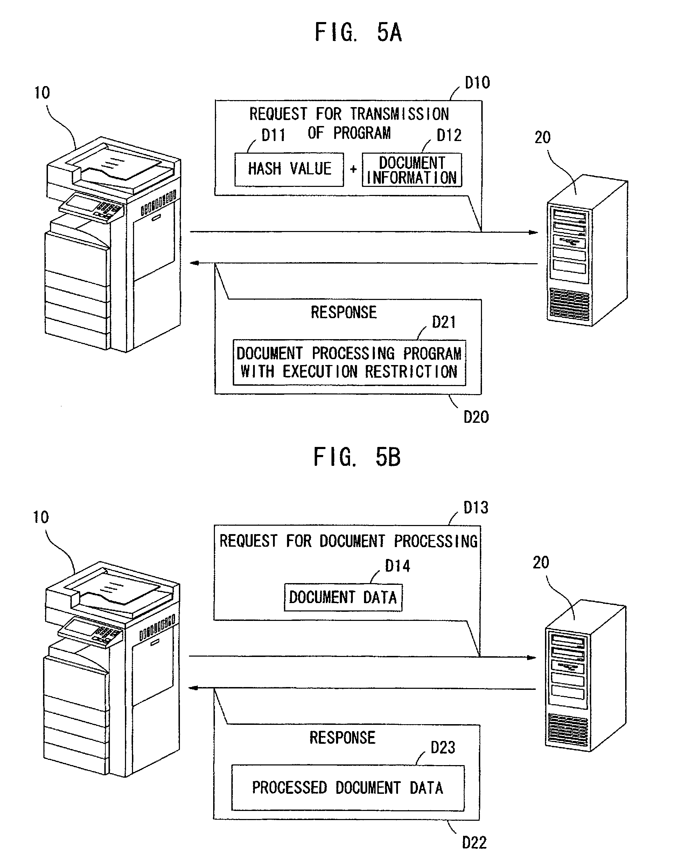

Figs. 5A and 5B each show an exemplary data communication between the image processing device 10 and the web server device 20 when the image processing device 10 executes document processing using a service of the web server device 20. Fig. 5A shows data communication when the document data to be processed is designated by the user as confidential document, and Fig. 5B shows data communication when the document data to be processed is designated as non-confidential document.

First, data communication when the document data to be processed is confidential document is explained. In response to the instructions for execution of the job received from the user, the image processing device 10 generates a hash value and document information corresponding to the contents of the document data specified as a subject of processing, and transmits a request for transmission of program D10 (hereafter, request for program) including a hash value D11 and document information D12 to the web server device 20.

The hash value D11 is the value returned by a specific hash function. More specifically, the hash function takes document data to be processed input, carries out computation and produces the hash value. The hash value is a unique piece of data that corresponds to document data (contents). So, as document data run through the hash function differs, the hash value to be produced should be different. It is impossible to find the contents of the original document data with the hash value even if the hash value is known. The image processing device 10 makes calculation of the hash value as for identification information used for identifying the document data to be processed.

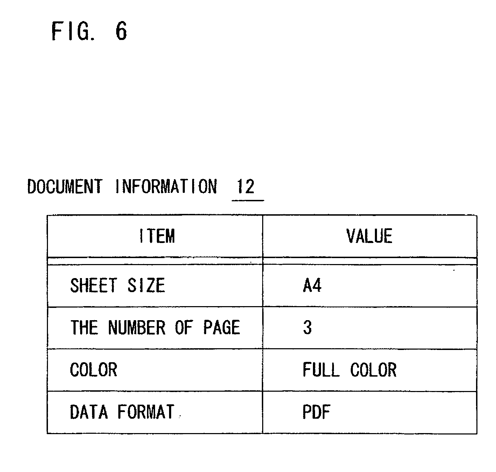

Attachment information such as a sheet size and the number of page is extracted from the document data to be processed, and the document information D12 is generated. Fig. 6 is an example of the document information D12. In the example, the document information D12 contains four items that are sheet size, the number of pages, color and data format, and in each of which, a value responsive to the document data is hold. The document information D12 may hold information besides above-described four items.

Next, as shown in Fig. 5A, after receiving the request for program D10 including the hash value D11. and the document information D12 from the image processing device 10, the web server device 20 reads the document processing program 22 stored in the storage device 21, and sets restriction for execution on the read document processing program 22. To be more specific, the web server device 20 sets the execution restriction that only document data from which a hash value matches the hash value D11 included in the request for program D10 is produced is allowed to be processed and that document data from which a hash value does not match the hash value D11 is produced is not allowed to be processed. In addition to that, the web server device 20 sets the execution restriction that only document data which matches values of respective items in the document information D12 is allowed to be processed and that document data which does not match the values of respective items is not allowed to be processed. Furthermore, the web server device 20 restricts the number of execution time of the document processing program 22 to only once. The web server device 20 then transmits a document processing program D21 on which the execution restriction is set as described above as a response D20 to the request for program D10 received from the image processing device 10.

The image processing device 10 executes the document processing program D21. with execution restriction received from the web server device 20 once, thereby processing the document data to be processed specified by the user. So, when the document data is confidential document, the document data itself is not revealed on the internet 9. The image processing device 10 acquires the document processing program D21 with execution restriction from the web server device 20 and executes the acquired document processing program D21, thereby processing the document data.

Data communication when the document data to be processed is non-confidential document is explained next. As shown in Fig. 5B, after receiving instructions for execution of a job from the user, the image processing device 10 transmits a request for document processing D13 including document data D14 specified as a subject of processing to the web server device 20. In response to the receipt of the request for document processing D13 from the image processing device 10, the web server device 20 reads the document processing program 22 stored in the storage device 21 and executes the read program, thereby processing the document data D14. The web server device 20 then transmits processed document data D23 which is generated by processing the document data D14 as a response D22 to the request for document processing D13 received from the image processing device 10. Therefore, when the document data is non-confidential document, the image processing device 10 transmits the document data D14 to the web server device 20, thereby acquiring the processed document data D23 from the web server device 20. The processing load on the image processing device 10 may be reduced. Also, the document data D14 does not include confidential information therein, so it does not cause any security problem.

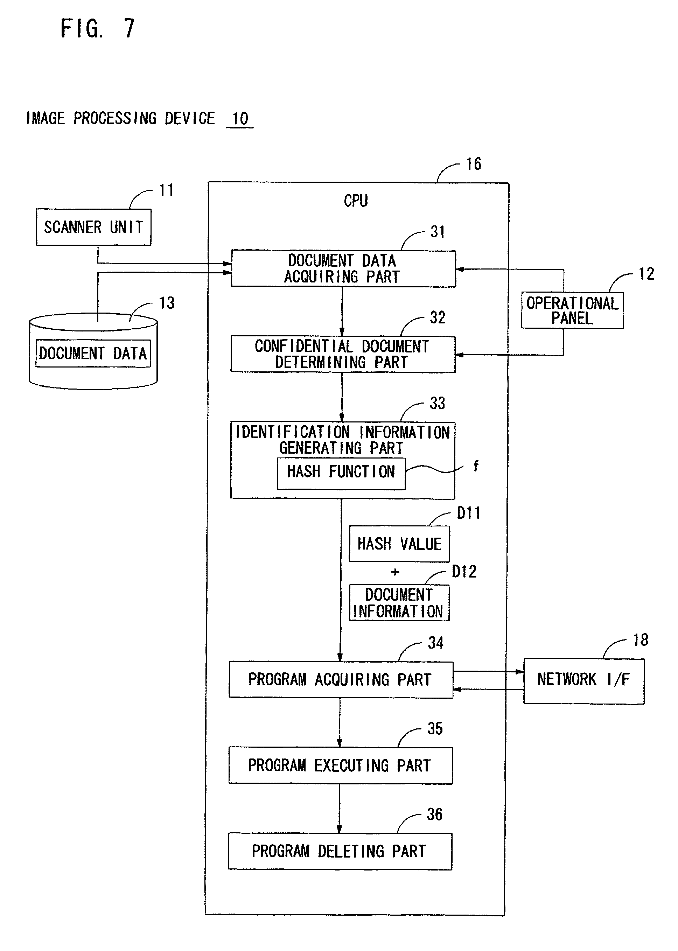

The example when the confidential document is to be processed by the image processing device 10 using the service of the web server device 20 is described more in detail next. Fig. 7 is a block diagram showing a functional configuration of the CPU 16 for processing confidential document in the image processing device 10. As illustrated in Fig. 7, the CPU 16 functions as a document data acquiring part 31, a confidential document determining part 32, an identification information generating part 33, a program acquiring part 34, a program executing part 35 and a program deleting part 36.

The document data acquiring part 31 acquires document data to be processed specified by the user. The document data acquiring part 31 based on an operation to specify document data made by the user on the operational panel 12 acquires document data to be processed from the scanner unit 11 or from the storage device 13.

The confidential document determining part 32 determines confidentiality setting of the document data to be processed. The confidential document determining part 32 determines whether the document data to be processed is confidential document or non-confidential document based on user's operation for confidentiality setting made on the operational panel 12. When, however, the document data 14 stored in the storage device 13 is selected as a subject of processing, accompanying information indicating that the document data 14 is confidential document is sometimes added to the document data 14. In such case, the confidential document determining part 32 is capable of determining automatically whether or not the selected document data 14 is confidential document based on the accompanying information.

The identification information generating part 33 is put into operation to generate the above-described hash value D11 and document information D12 when the document data to be processed is confidential document. The identification information generating part 33 includes a hash function f that produces the hash value D11 based on the document data to be processed. The identification information generating part 33 makes the hash function f to take the document data to be processed input and carries out computation, thereby producing the hash value D11 which is a unique numerical representation of corresponding document data. In addition, the identification information generating part 33 determines setting such as sheet size, the number of page, color and data format defined for the document data to be processed based on the document data, and generates the document information D12.

The program acquiring part 34 is also a processing part put into operation when the document data to be processed is confidential document. After the hash value D11 and the document information D12 are generated by the identification information generating part 33, the program acquiring part 34 generates the request for program D10 including the generated hash value D11 and document information D12 and transmits the request for program D10 to the web server device 20 via the network interface 18. With the transmission of the request for program D10, the program acquiring part 34 receives a response D20 from the web server device 20 and acquires the document processing program D21 with execution restriction included in the received response D20.

The program executing part 35 is another processing part put into operation when the document data to be processed is confidential document. The program executing part 35 executes the document processing program D21 on which the execution restriction is set acquired by the program acquiring part 34. To be more specific, the program executing part 35 makes the document data to be processed acquired by the document data acquiring part 31 input the document processing program D21 with execution restriction and runs the program. The execution restriction on the document processing program D21 is then deactivated, and the document data to be processed may be processed in accordance with appropriate document processing. As a result, the appropriate processed document data is allowed to be obtained in the image processing device 10.

The program deleting part 36 is still another part put into operation when the document data to be processed is confidential document. When the document data to be processed is processed in accordance with the appropriate document processing by the program executing part 35, the program deleting part 36 deletes the document processing program D21 with execution restriction acquired by the program acquiring part 34. More in detail, the number of execution time set on the document processing program D21 with execution restriction is limited to only once. So, after the document data to be processed is processed appropriately by the program executing part 35, the document processing program D21 with execution restriction is no longer needed to be hold. The document processing program D21 with execution restriction is thereafter deleted.

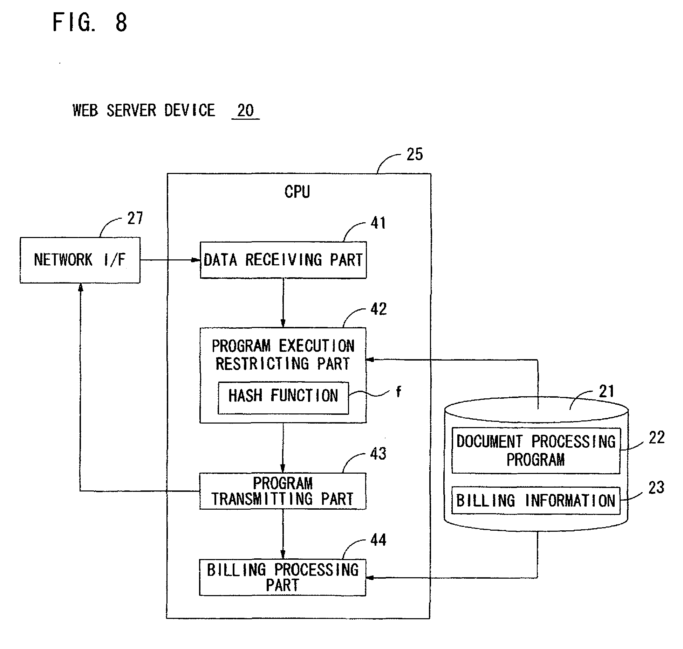

Fig. 8 is a block diagram showing an exemplary functional configuration of the CPU 25 when document processing program D21 with execution restriction is created in the web server device 20. As shown in Fig. 8, the CPU25 functions as a data receiving part 41, a program execution restricting part 42, a program transmitting part 43 and a billing processing part 44.

The data receiving part 41 receives data over the internet 9 via the network interface 27. The data receiving part 41 analyzes the received data, and puts the program execution restricting part 42 into operation when the received data is the request for program D10. The data receiving part 41 outputs the hash value D11 and the document information D12 included in the request for program D10 to the program execution restricting part 42.

The program execution restricting part 42 first reads the document processing program 22 stored in the storage device 21, and sets execution restriction on the read document processing program 22 based on the hash value D11 and the document information D12 received from the data receiving part 41. The program execution restricting part 42 then generates the document processing program D21 with execution restriction. The program execution restricting part 42 includes a hash function f the same as the hash function f included in the image processing device 10. As implementing the hash function f into the document processing program 22, the program execution restricting part 42 allows a hash value to be calculated from the input document at execution of the program.

The program execution restricting part 42 as described above sets the execution restriction that allows only the document data from which the same hash value as the hash value D11 included in the request for program D10 is produced to be processed. At the same time, the program execution restricting part 42 sets the execution restriction that allows only the document data which matches values of respective items in the document information D12. Moreover, the program execution restricting part 42 sets the execution restriction that allows the number of execution time only once on the document processing program 22. Such execution restrictions are implemented, for example, into the document processing program 22 as conditions for execution of processing document data.

As explained above, the document processing program D21 with execution restriction is created. The created document processing program D21 with execution restriction is capable of execution in the image processing device 10. At this time, in response to the receipt of the document data to be processed, a hash value is calculated from the received document data based on the implemented hash function into the program. The further processing is not carried out unless the calculated hash value matches the hash value D11 set in advance with the document processing program D21 with execution restriction. Furthermore, the further processing is not carried out unless sheet size, the number of page, color and data format of the document data matches values of those defined in advance in the document processing program D21 with execution restriction when the document data to be processed is received. In contrast, as not only the hash value produced by calculating the document data to be processed when the document data is received matches the hash value D11 set in advance with the document processing program D21 with execution restriction, but also sheet size, the number of page, color and data format of the document data matches respective values of those items defined in advance with the document processing program D21 with execution restriction, the further processing is proceeded and the document data is processed. After the document processing is carried out normally, an execution disabling flag for disabling document processing from next time is implemented in the document processing program D21 with execution restriction, for instance, and the execution of the program completes.

The program transmitting part 43 transmits the above-described document processing program D21 with execution restriction to the image processing device 10. As the document processing program D21 with execution restriction is created by the program execution restricting part 42, the program transmitting part 43 transmits the created document processing program D21 with execution restriction to the image processing device 10 via the network interface 27.

The billing processing part 44 is put into operation when transmission of the document processing program D21 with execution restriction by the program transmitting part 43 completes normally to charge to the image processing device 10 or the user of the image processing device 10. To be more specific, the billing processing part 44 reads the billing information 23 from the storage device 21. In the billing information 23, for example, at least one unit price corresponding to one or more item of sheet size, the number of page, color or data format is defined. So, the billing processing part 44 determines price to charge based on the billing information 23 read from the storage device 21 and values of respective items in the document information D12, and performs billing processing. Therefore, when transmitting the document processing program 22 to the image processing device 10, the web server device 20 transmits the document processing program D21 with execution restriction that allows processing of predetermined document data only once. Accordingly, the billing processing part 44 performs billing processing to charge a price for using a service once based on the predetermined document data. The price to be charged for one time use may be kept low, and the usage of a service by the user may be promoted.

Next, operations in the image processing device 10 and the web server device 20 in the above-described document processing system 1 are described next.

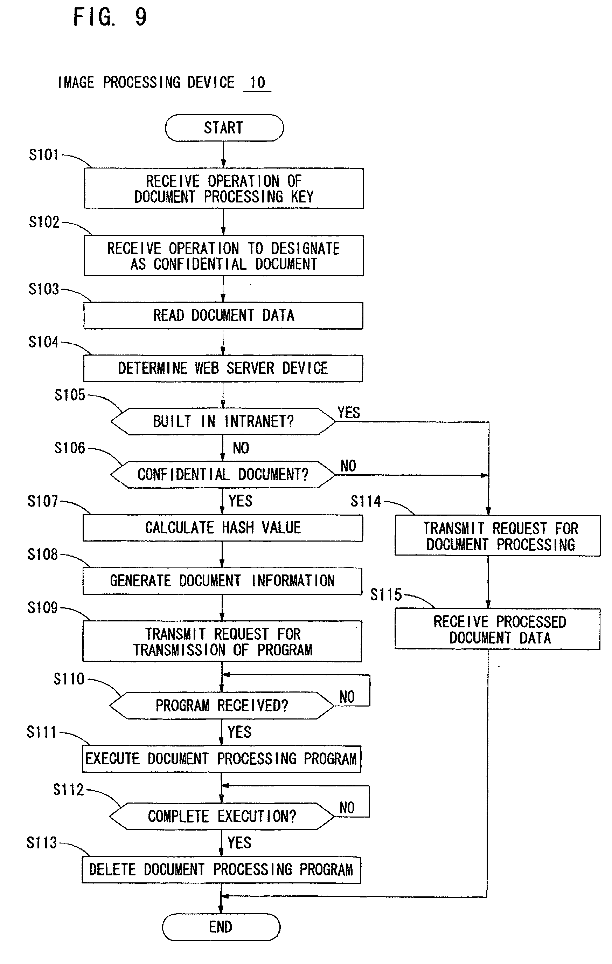

Fig. 9 is a flow diagram explaining an exemplary procedure of the image processing device 10. The exemplary procedure shown in this flow diagram is mainly realized by the CPU 16 of the image processing device 10. The image processing device 10 receives a user's operation of the document processing key 51 with displaying the initial screen (see Fig. 4) on the operational panel 12 (step S101). The image processing device 10 then receives a user's operation to designate as confidential document with displaying the confidentiality setting screen (see Fig. 4) on the operational panel 12 (step S102). The image processing device 10 reads document data specified by the user (step S103).

The image processing device 10 determines whether or not the web server device 20 providing a service of the document processing (for example, OCR processing) specified by the user is built in the intranet 8 (step S105). When determining that the web server device 20 is built outside the intranet 8 and the image processing device 10 needs to connect with the web server device 20 through the internet 9 (when a result of step S105 is NO), the image processing device 10 then determines whether or not document data to be processed is confidential document (step S106). When the document data is confidential document (when a result of step S106 is YES), a hash value D11 is produced by calculating the document data (step S107) and document information D12 is generated (step S108). The image processing device 10 transmits the request for program D10 including the hash value D11 and the document information D12 to the web server device 20 (step S109).

The image processing device 10 is put into a waiting state until receiving the document processing program D21 with execution restriction from the web server device 20 (step S110). As receiving the document processing program D21 with execution restriction (when a result of step S110 is YES), the image processing device 10 executes the received document processing program D21 with execution restriction (step S111). In the first preferred embodiment, the document data from which the hash value D11 and the document information D12 are generated in step S107 and S108 is input and processed. The execution restriction on the document processing program D21 is lifted, and the document data to be processed is processed in accordance with appropriate document processing. By way of example, when the document processing is OCR processing, characters contained in the document data are extracted one by one and document data including character code is generated. When the document processing is translation, character strings contained in the document data are converted to character strings in another language and document data consisted of document code in another language is generated. When the document processing is image processing, an image contained in the document data is processed in accordance with predetermined image processing and document data processed in accordance with image processing is generated. The processed document data generated as described above is output in a form of file or in a form of output specified by the user.

The image processing device 10 determines whether or not execution of the document processing program D21 whose execution restriction is lifted is complete normally (step S112). When the execution is complete normally (when a result of step S112 is YES), the image processing device 10 deletes the document processing program D21 with execution restriction received from the web server device 20 (step S113). As a result, the document processing program D21 with execution restriction is allowed to be executed only once. Moreover, the document processing program D21 with execution restriction which has already been executed once may be deleted from the image processing device 10.

In contrast, while the web server device 20 which provides a service of document processing designated by the user is built in the intranet 8 (when a result of step S105 is NO), or while document data to be processed is non-confidential document (when a result of step S106 is NO), the image processing device 10 transmits the request for document processing D13 including the document data to the web server device 20 (step S114). To be more specific, as the web server device 20 is built in the intranet 8, information is not revealed to outside. Also, even if the web server device 20 is built outside the intranet 8, any problem does not occur since the document data is non-confidential document. The image processing device 10 transmits the request for document processing D13 including the document data. The document data is processed in accordance with document processing in the web server device 20, so processing load on the image processing device 10 is reduced. The image processing device 10 receives the processed document data from the web server device 20 thereafter (step S115), and the process is complete.

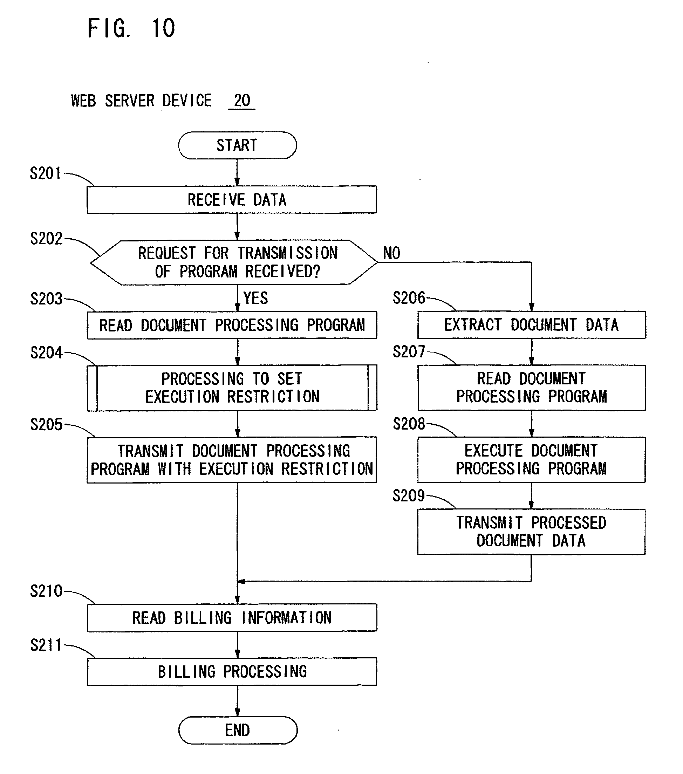

Fig. 10 is a flow diagram explaining an exemplary procedure of processing in the web server device 20. This flow diagram shows an exemplary procedure of processing mainly realized by the CPU 25 of the web server device 20. After receiving data from the image processing device 10 (step S201), the web server device 20 determines whether or not received data is the request for program D10 (step S202). When the received data is the request for program D10 (when a result of step S202 is YES), the web server device 20 reads the document processing program 22 from the storage device 21 (step S203) and executes processing to set execution restriction on the read document processing program 22 (step S204).

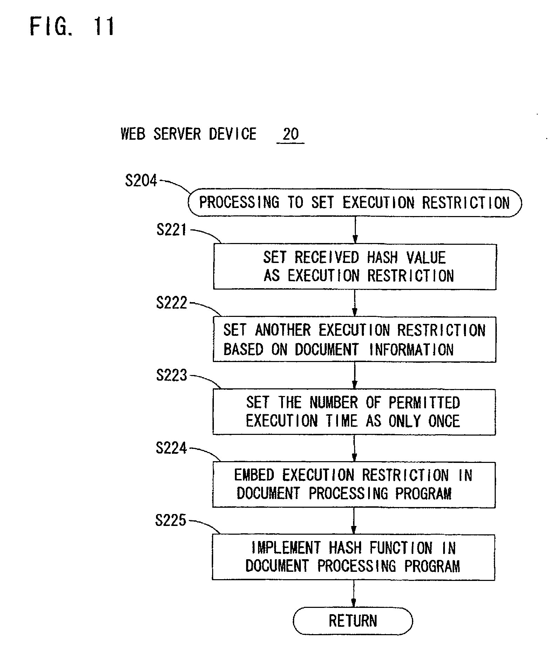

Fig. 11 is a flow diagram explaining in detail an exemplary procedure of the processing to set execution restriction (step S204). The web server device 20 sets the hash value D11 included in the received request for program D10 as the execution restriction on the document processing program 22 (step S221). The web server device 20 sets another execution restriction on the document processing program 22 based on the document information D12 included in the received request for program D10 (step S222). Detail of document data, such as sheet size, the number of page, color and data format is set as execution restriction. The web server device 20 next sets the number of permitted execution time of the document processing program 22 only once (step S223). The number of execution time is then restricted. The web server device 20 embeds the execution restriction set in step S221 to S223 in the document processing program 22 (step S224), and implements the hash function f hold in the web server device 20 in the document processing program 22 (step S225). The document processing program D21 with execution restriction which is the document processing program 22 on which the execution restriction is set is created.

Referring again to the flow diagram shown in Fig. 10, the web server device 20 transmits the document processing program D21 with execution restriction thereby created to the image processing device 10 (step S205). After transmission is complete normally, the process moves on to step S210.

When the data received by the web server device 20 from the image processing device 10 is not the request for program D10 (when a result of step S202 is NO), it is determined that the request for document processing D13 is received. So, the document data D14 contained in the request for document processing D13 is extracted (step S206). The web server device 20 reads the document processing program 22 from the storage device 21 (step S207), and processes the document data D14 by executing the read document processing program 22 (step S208). After this document processing, the web server device 20 transmits the processed document data D23 to the image processing device 10 (step S209). As the transmission is complete normally, the process moves on to step S210.

While the web server device 20 can transmit a response to the request from the image processing device 10 normally, the web server device 20 reads the billing information 23 from the storage device 21 thereafter (step S210), and performs billing processing (step S211). In the billing processing, price to charge which corresponds to a price for using the service once is determined and charged. Therefore, even when the document processing program D21 with execution restriction is transmitted, a price to charge which corresponds to a price for processing only document data to be processed just once is determined and charged.

As described above, when the document data to be processed is confidential document, the image processing device 10 of the first preferred embodiment produces the hash value D11 for identifying the document data based on the document data and transmits the produced hash value D11 to the web server device 20. The image processing device 10 then downloads the document processing program D21 with execution restriction which is capable of processing only document data which corresponds to the hash value D11 from the web server device 20. The document processing program D21 with execution restriction is executed in the image processing device 10, and the document data which is confidential document may be processed in accordance with predetermined document processing. Therefore, even when data communication is realized between the web server device 20 through the internet 9, confidential document is prevented from being reveled on the internet 9. At the same time, a service provided by the web server device 20 may be made available in the image processing device 10.

As receiving the request for program D10 from the image processing device 10, the web server device 20 based on the hash value D11 for identifying document data to be processed included in the request for program D10 creates the document processing program D21 with execution restriction which is capable of processing only document data corresponding to the hash value D11. The document processing program D10 received from the web server device 20 is allowed to be prevented from being executed without limited number of times in the image processing device 10. For billing processing performed in the web server device 20, a price to charge which is equivalent to processing only predetermined document data corresponding to the hash value D11 may be determined and charged. That leads to keep the price to charge for each use low, and to promote usage of a service by a user.

According to the first preferred embodiment, for generating the document processing program D21 with execution restriction from the document processing program D22, the web server device 20 sets not only execution restriction based on the hash value D11 but also the document information D12. When the document information D12 that is to be referred as basic information for billing processing in the web server device 20 shows different information from that of document data to be actually processed in the image processing device 10, restriction in order not to allow document processing in the image processing device 10 may be set. By way of example, it is assumed document data to be actually processed in the image processing device 10 contains 100 pages, Even though the fact, the document information D12 included in the request for program D10 shows that the document containing one page. Such fraudulent usage of the service may be prevented with the above-described execution restriction. As the result, adequate billing processing based on sheet size or the number of page to be actually processed in the image processing device 10 may be performed in the web server device 20.

As described above, the document processing device generates identification information for identifying document data to be processed based on the document data, and transmits the generated identification information to the server device. As the result, the document processing device downloads a document processing program capable of processing only document data which corresponds to the identification information from the server device, and processes the document data to be processed. So, even when the document data to be processed is confidential document, the confidential document may be prevented from being revealed. The user is not necessary to determine whether or not the server device is built on the internet to use a service provided by the server device with confidential document not being revealed.

As also explained above, based on the identification information for identifying document data to be processed included in a request for transmission received from the document processing device, the server device creates the document processing program capable of processing only the document data that corresponds to the received identification information. The server device then transmits the created document processing program to the document processing device. So, the document processing program is caused to be prevented from being executed without limited number of times in the document processing device. Therefore, when billing processing is performed in the server device for example, a fee for processing the document data which corresponds to the identification information can only be charged.

The document processing system as described above is capable of preventing information such as confidential information from being revealed when the document image processing device uses the service provided by the server device. Also, the server device is able to perform billing processing for each provision of the service for charge.

### (Second Preferred Embodiment)

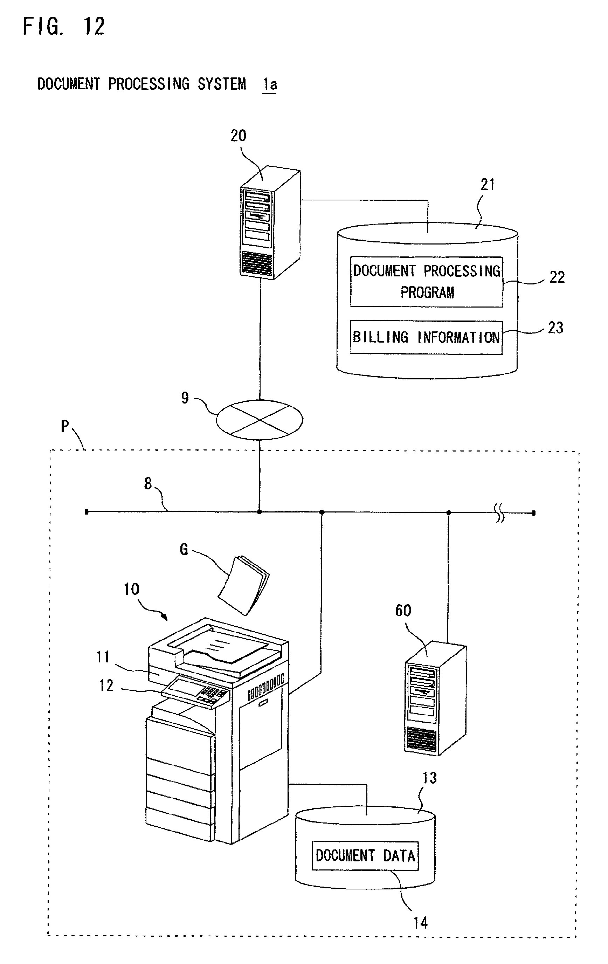

A second preferred embodiment of the present invention is described next. Fig. 12 shows an exemplary configuration of a document processing system 1a of the second preferred embodiment of the present invention. As well as the one in the first preferred embodiment, the document processing system 1a includes a network in a manner that the intranet 8 and the internet 9 are connected to each other. The image processing device 10 and a relay server device 60 are connected to the intranet 8. The web server device 20 is connected to the internet 9. In the second preferred embodiment, when a service provided by the web server device 20 is used in the image processing device 10, data communication between the image processing device 10 and the web server device 20 is made via the relay server device 60, and the relay server device 60 functions as a document processing device.

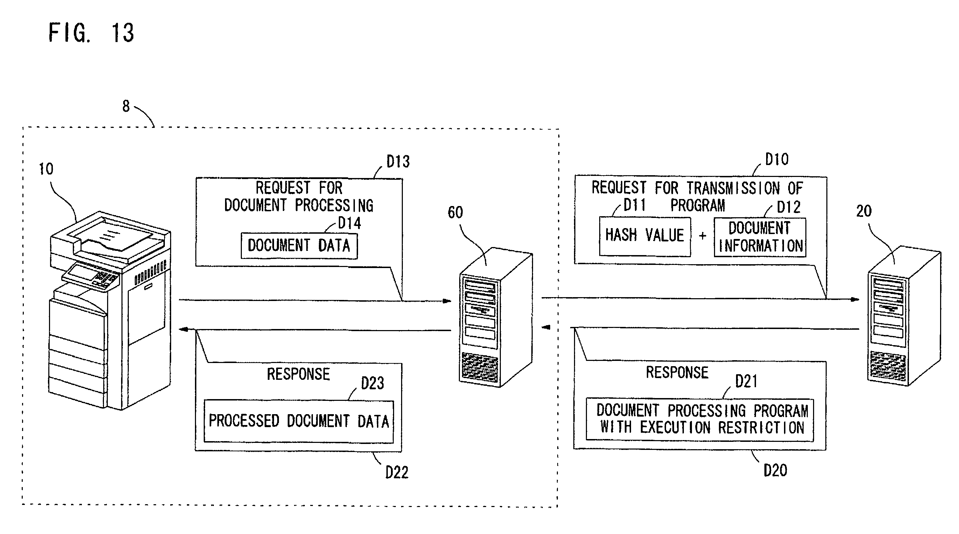

Fig. 13 shows an exemplary data communication among the image processing device 10, the relay server device 60 and the web server device 20 when the image processing device 10 executes document processing using a service of the web server device 20. Fig. 13 shows data communication when document data to be processed is designated by the user as confidential document.

As referring to Fig. 13, after instructions for execution of a job is given by a user, the image processing device 10 transmits the request for document processing D13 including the document data D14 specified as a subject of processing to the relay server device 60 built in the intranet 8. The request for document processing D13 thereby transmitted includes information indicating whether or not the document data D14 is confidential document.

The relay server device 60 includes functions the same as those of the image processing device 10 described in the first preferred embodiment. More specifically, when the document data D14 is confidential document, the relay server device 60 based on the document data D14 generates the hash value D11 and the document information D12 those correspond to the content of the document data D14. The relay server device 60 then transmits the request for program D10 including the hash value D11 and the document information D12 thereby generated to the web server device 20.

The configuration of the web server device 20 of the second preferred embodiment is the same as that of the first preferred embodiment. After receiving the request for program D10 from the relay server device 60, the web server device 20 creates the document processing program D21 with execution restriction, and transmits the response D20 including the created document processing program D21 with execution restriction to the relay server device 60. In the second preferred embodiment, the web server device 20 determines a price to charge equivalent to a price for using a service once, and performs billing processing.

As receiving the document processing program D21 with execution restriction from the web server device 20, the relay server device 60 executes the received document processing program D21 with execution restriction, thereby causing the document data D14 to be processed. In the second preferred embodiment, the document processing program D21 with execution restriction is set to allow processing of only the document data D14. So, the relay server device 60 is capable of processing only the document data D14 received from the image processing device 10 by executing the document processing program D21 with execution restriction.

After the processing of document data D14 is complete therein, the relay server device 60 transmits the response D22 including the processed document data D23 to the image processing device 10. In response to the normal completion of the transmission, the relay server device 60 deletes the document processing program D21 with execution restriction acquired from the web server device 20.

According to the second preferred embodiment as described above, the relay server device 60 built in the intranet 8 functions as the document processing device. When document data received from the image processing device 10 is confidential document, the relay server device 60 produces the hash value D11 for identifying the document data based on the document data, and transmits the produced hash value D11 to the web server device 20. The relay server device 60 then downloads the document processing program D21 with execution restriction that is capable of processing only document data which corresponds to the hash value D11 from the web server device 20. The relay server device 60 runs the downloaded document processing program D21 with execution restriction therein, thereby processing the document data which is confidential document in accordance with predetermined document processing. So, in the second preferred embodiment, as well as the first preferred embodiment, even when data communication is made between the image processing device 10 and the web server device 20 through the internet 9, the confidential document is prevented from being revealed on the internet 9. Also, a service provided by the web server device 20 is made available in the image processing device 10. Especially in the second preferred embodiment, the document processing program D21 with execution restriction is executed in the relay server device 60. So, even for processing confidential document, load on the image processing device 10 may be reduced.

As the same as the first preferred embodiment, a price to charge for each usage is caused to be kept low, so usage of a service by the user may be promoted.

### (Third Preferred Embodiment)

A third preferred embodiment of the present invention is described next. According to the third preferred embodiment, when a service provided by the web server device 20 is used by a user by making operation on the image processing device 10, estimation of a price to be charged may be provided without transmission of document data which is confidential document to the web server device 20. The configuration of the document processing system the third preferred embodiment is the same as the one of the first preferred embodiment.

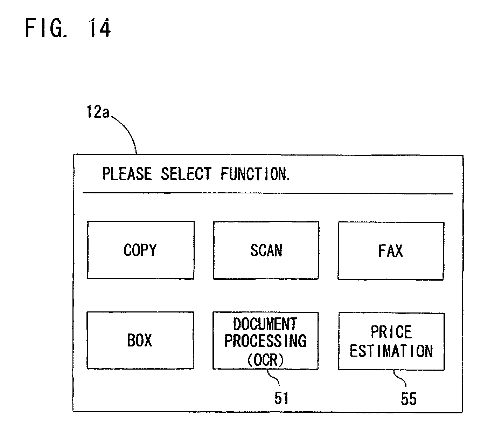

Fig. 14 is an example of an initial screen displayed on the display unit 12a of the operational panel 12 in the image processing device 10 of the third preferred embodiment. On the initial screen, multiple operation keys operable for a user are displayed. In the example, the document processing key 51 is an operation key that is to be operated when the user would like to make the image processing device 10 to execute document processing using a service provided by the web server device 20 as described above. A key for estimation of price to be charged 55 (thereafter, price estimation key) is featured by the third preferred embodiment, and is an operation key to make estimation of a price for using a service provided by the web server device 20. When a user would like to see an estimation of a price in advance, he or she makes operation of the price estimation key 55. In response to the operation of the price estimation key 55, the image processing device 10 acquires the billing information 23 from the web server device 20, and produces the estimation of the price by making calculation.

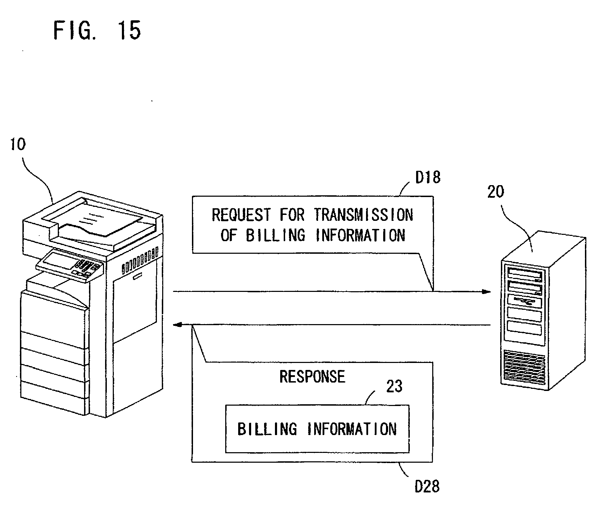

Fig. 15 shows an exemplary data communication between the image processing device 10 and the web server device 20 when the image processing device 10 acquires the billing information 23 from the web server device 20. As shown in Fig. 15, in response to the operation of the price estimation key 55 made by the user, the image processing device 10 transmits a request for transmission of billing information D18 (hereafter, request for billing information) to the web server device 20. As receiving the request for billing information D18 from the image processing device 10, the web server device 20 reads the billing information 23 stored in the storage device 21, and transmits the read billing information 23 as a response D28 to the request for billing information D18 received from the image processing device 10. The image processing device 10 receives the transmitted billing information 23, thereby being capable of calculating in advance a price to be charged by the web server device 20 when document processing is executed. By way of example, for confidential document, the billing information 23 is to be referred based on sheet size or the number of page of the confidential document. So, the price to be charged may be calculated in the image processing device 10.

As acquiring the billing information 23 from the web server device 20, the image processing device 10 stores the acquired billing information 23 in the storage device 13. If the billing information 23 has already been stored in the storage device 13 when the price estimation key 55 is operated by the user, the image processing device 10 refers the billing information 23 already been stored in the storage device 13, thereby calculating the price to be charged. So, in such case, the image processing device 10 does not make data communication as shown in Fig. 15. To be more specific, once data communication as illustrated in Fig. 15 is made between the image processing device 10 and the web server device 20, the estimation of the price may be calculated in the image processing device 10 without making data communication thereafter.

The billing information 23 transmitted from the web server device 20 to the image processing device 10 may be a program for calculation of a price to charge that is allowed to be executed in the image processing device 10.

As described above, according to the third preferred embodiment, the web server device 20 transmits the billing information 23 stored in the storage device 21 in response to the requests sent by the image processing device 10. As the result, when the confidential document is processed using the service provided by the web server device 20, the image processing device 10 is capable of calculating in advance the price to be charged by the web server device 20 without transmitting the confidential document to the web server device 20. So, it offers an advantage to a user of being able to see in advance the price to be charged and to determine whether or not to use the service provided by the web server device 20 after seeing the price.

The way of calculating the estimation of the price in the image processing device 10 may be applied to the image processing device 10 explained in the first and second preferred embodiments.

### (Modifications)

While the preferred embodiments of the present invention have been described above, the present invention is not intended to be limited to the details shown above. Numerous modifications and variations can be devised without departing from the scope of the invention.

As an example, in the above-described preferred embodiments, the image processing device 10 or the relay server device 60 functions as the document processing device of the present invention. However, the document processing device of the present invention is not always limited to the above-described image processing device 10 or the relay server device 60. So, a device such as a general used personal computer built in the intranet 8 may function as the document processing device.

## Claims

1. A document processing device (10) for downloading a document processing program (22) from a server device (20) through a network (8, 9) and for executing said document processing program (22), thereby processing document data to be processed, **characterized in that** document processing device (10) includes:
an identification information generating part (33) for generating identification information for identifying said document data to be processed based on said document data;
a program acquiring part (34) for transmitting said identification information to said server device (20), and downloading said document processing program (22) capable of processing only said document data that corresponds to said identification information from said server device (20); and
a program executing part (35) for processing said document data to be processed by executing said document processing program (22) acquired by said program acquiring part (34).

2. The document processing device (10) according to claim 1, wherein
said identification information generating part (33) further generates document information (D12) containing sheet size or the number of page based on said document data to be processed, and
said program acquiring part (34) transmits said document information (D12) together with said identification information to said server device (20) and downloads said document processing program (22) capable of processing only said document data that corresponds to said identification information and said document information (D12).

3. The document processing device (10) according to claim 1 or 2, wherein said identification information generating part (33) produces a hash value corresponding to contents of said document data to be processed as said identification information.

4. The document processing device (10) according to one of claims 1 to 3, wherein after executing said document processing program (22) acquired by said program acquiring part (34) and processing said document data to be processed, said program executing part (35) deletes said document processing program (22).

5. A server device (20) for transmitting a document processing program (22) in response to a request for transmission received from a document processing device (10) with which the server device is connected through a network (8, 9), **characterized in that** the server device (20) includes
a program execution restricting part (42) for creating said document processing program capable of processing only document data to be processed that corresponds to identification information for identifying said document data based on said identification information included in said request for transmission; and
a program transmitting part (43) for transmitting said document processing program (22) created by said program execution restricting part (42) to said document processing device (10).

6. The server device (20) according to claim 5, wherein said program execution restricting part (42) creates said document processing program (22) which is allowed execution only once.

7. The server device (20) according to claim 5 or 6, wherein said program execution restricting part (42) further creates said document processing program (22) capable of processing only said document data which matches document information (D12) containing sheet size or the number of page based on said document information (D12) included in said request for transmission.

8. The server device (20) according to one of claims 5 to 7, further comprising a billing processing part (44) for performing billing processing to said document processing device (10) in accordance with transmission of said document processing program (22) by said program transmitting part (43).

9. The server device (20) according to claim 8, wherein said billing processing part (44) determines a price to charge based on said document information (D12) containing the sheet size or the number of page included in said request for transmission.

10. The server device (20) according to claim 9, further comprising:
a storage part (23) for storing billing information for determining said price to charge; and
a transmitting part for transmitting said billing information stored in said storage part (23) in response to a request from said document processing device (10).

11. The server device (20) according to one of claims 5 to 10, wherein
said identification information is a hash value corresponding to contents of said document data to be processed, and
said program execution restricting part (42) creates said document processing program (22) capable of processing only said document data which corresponds to said hash value.

12. A document processing system comprising a server device (20) and a document processing device (10) for downloading a document processing program (22) from said server device (20) and for executing said downloaded document processing program (22), thereby processing document data to be processed, said document processing device (10) and said server device (20) being connected through a network (9), **characterized in that**
said document processing device (10) includes:
an identification information generating part (33) for generating identification information for identifying said document data to be processed based on said document data;
a program acquiring part (34) for transmitting a request for transmission including said identification information to said server device (20), and receiving said document processing program (22) capable of processing only said document data that corresponds to said identification information from said server device (20); and
a program executing part (35) for processing said document data to be processed by executing said document processing program (22) acquired by said program acquiring part (34), and
said server device (20) includes:
a program execution restricting part (42) for creating said document processing program (22) capable of processing only document data that corresponds to said identification information based on said identification information included in said request for transmission; and
a program transmitting part (43) for transmitting said document processing program (22) created by said program execution restricting part (42) to said document processing device (10).

13. The document processing system according to claim 12, wherein said program execution restricting part (42) creates said document processing program (22) which is allowed execution only once in said document processing device (10).

14. The document processing system according to claim 13, wherein said program executing part (35) deletes said received document processing program (22) after processing said document data to be processed by executing said document processing program (22).

15. The document processing system according to one of claims 12 to 14, wherein in accordance with transmission of said document processing program (22) created by said program execution restricting part (42) to said document processing device (10), said server device (20) performs billing processing to said document processing device (10).

16. The document processing system according to claim 15,
said server device (20) further comprising:
a storage part (23) for storing billing information for performing said billing processing; and
a transmitting part for transmitting said billing information stored in said storage device to said document processing device (10) in response to a request from said document processing device (10).

## Patentansprüche

1. Dokumentverarbeitungsvorrichtung (10) zum Herunterladen eines Dokumentverarbeitungsprogramms (22) von einer Servervorrichtung (20) über ein Netzwerk (8, 9) und zum Ausführen des Dokumentverarbeitungsprogramms (22), wodurch zu verarbeitende Dokumentdaten verarbeitet werden; **dadurch gekennzeichnet, dass** die Dokumentverarbeitungsvorrichtung (10) enthält:
einen Identifikationsinformations-Erzeugungsteil (33) zum Erzeugen von Identifikationsinformation zum Identifizieren der zu verarbeitenden Dokumentdaten, basierend auf den Dokumentdaten;
einen Programmermittlungsteil (34) zum Übertragen der Identifikationsinformationen an die Server-Vorrichtung (20) und Herunterladen des Dokumentverarbeitungsprogramms (22), das zum Verarbeiten nur der Dokumentdaten in der Lage ist, die der Identifikationsinformation entsprechen, aus der Server-Vorrichtung (20); und
einen Programmausführteil (35) zum Verarbeiten von zu verarbeitenden Dokumentdaten durch Ausführen des Dokumentverarbeitungsprogramms (22), das durch den Programmermittlungsteil (34) erhalten worden ist.

2. Dokumentverarbeitungsvorrichtung (10) gemäß Anspruch 1, wobei
der Identifikationsinformations-Erzeugungsteil (33) weiter Dokumentinformationen (D12) erzeugt, die Blattgröße oder Anzahl von Seiten enthalten, basierend auf den zu verarbeitenden Dokumentdaten, und
der Programmermittlungsteil (34) die Dokumentinformationen (D12) zusammen mit den Identifikationsinformationen an die Servervorrichtung (20) sendet und das Dokumentverarbeitungsprogramm (22) herunterlädt, das zum Verarbeiten nur der Dokumentdaten in der Lage ist, die den Identifikationsinformationen und den Dokumentinformationen (D12) entsprechen.

3. Dokumentverarbeitungsvorrichtung (10) gemäß Anspruch 1 oder 2, wobei der Identifikationsinformations-Erzeugungsteil (33) einen Hash-Wert entsprechend Inhalten der als die Identifikationsinformationen zu verarbeitenden Dokumentdaten erzeugt.

4. Dokumentverarbeitungsvorrichtung (10) gemäß einem der Ansprüche 1 bis 3, wobei nach Ausführen des durch den Programmermittlungsteil (34) erfassten Dokumentverarbeitungsprogramms (22) und Verarbeiten der zu verarbeitenden Dokumentdaten der Programmausführteil (35) das Dokumentverarbeitungsprogramm (22) löscht.

5. Servervorrichtung (20) zum Senden eines Dokumentverarbeitungsprogramms (22) in Reaktion auf eine Anforderung zur Übertragung, die aus einer Dokumentverarbeitungsvorrichtung (10) empfangen worden ist, mit welcher die Servervorrichtung über ein Netzwerk (8, 9) verbunden ist, wobei die Servervorrichtung (20) **dadurch gekennzeichnet ist, dass** sie beinhaltet
einen Programmausführungsbeschränkungsteil (42) zum Erzeugen des Dokumentverarbeitungsprogramms, das zum Verarbeiten nur von zu verarbeitenden Dokumentdaten in der Lage ist, die Identifikationsinformationen zum identifizieren der Dokumentdaten entsprechen, basierend auf den in der Anforderung zur Übertragung enthaltenen Identifikationsinformationen; und
einen Programmsendeteil (43) zum Senden des Dokumentverarbeitungsprogramms (22), welches durch das Programmausführungsbeschränkungsteil (42) erzeugt wurde, an die Dokumentverarbeitungsvorrichtung (10).

6. Servervorrichtung (20) gemäß Anspruch 5, wobei der Programmausführungsbeschränkungsteil (42) das Dokumentverarbeitungsprogramm (22) erzeugt, dem eine Ausführung nur einmal gestattet ist.

7. Servervorrichtung (20) gemäß Anspruch 5 oder 6, wobei der Programmausführungsbeschränkungsteil (42) weiter das Dokumentverarbeitungsprogramm (22) erzeugt, welches in der Lage ist, nur die Dokumentdaten zu verarbeiten, die zu den Dokumentinformationen (D12) passen, welche Blattgröße oder Anzahl von Seiten enthalten, basierend auf den in der Anforderung zur Übertragung enthaltenen Dokumentinformationen (D12).

8. Servervorrichtung (20) gemäß einem der Ansprüche 5 bis 7, weiter umfassend einen Abrechnungsverarbeitungsteil (44) zum Durchführen einer Abrechnungsverarbeitung an der Dokumentverarbeitungsvorrichtung (10) gemäß der Übertragung des Dokumentverarbeitungsprogramms (22) durch den Programmübertragungsteil (43).

9. Servervorrichtung (20) gemäß Anspruch 8, wobei der Abrechnungsverarbeitungsteil (44) einen zu verlangenden Preis bestimmt, basierend auf den Dokumentinformationen (D12), welche die Blattgröße oder die Anzahl von Seiten enthalten, die in der Anforderung zur Übertragung beinhaltet sind.

10. Servervorrichtung gemäß Anspruch (20) gemäß Anspruch 9, weiter umfassend:
einen Speicherteil (23) zum Speichern von Abrechnungsinformationen zum Bestimmen eines zu verlangenden Preises; und
einen Übertragungsteil zum Übertragen der in dem Speicherteil (23) gespeicherten Abrechnungsinformationen in Reaktion auf eine Anforderung aus der Dokumentverarbeitungsvorrichtung (10).

11. Servervorrichtung (20) gemäß einem der Ansprüche 5 bis 10, wobei
die Identifikationsinformation ein Hash-Wert entsprechend Inhalten der zu verarbeitenden Dokumentdaten ist, und
der Programmausführungsbeschränkungsteil (42) das Dokumentverarbeitungsprogramm (22) erzeugt, das zum Verarbeiten nur der Dokumentdaten in der Lage ist, die dem Hash-Wert entsprechend.

12. Dokumentverarbeitungsvorrichtung, umfassend eine Servervorrichtung (20) und eine Dokumentverarbeitungsvorrichtung (10) zum Herunterladen eines Dokumentverarbeitungsprogramms (22) aus der Servervorrichtung (20) und zum Ausführen des heruntergeladenen Dokumentverarbeitungsprogramms (22) wodurch zu verarbeitende Dokumentdaten verarbeitet werden, wobei die Verarbeitungsvorrichtung (10) und die Servervorrichtung (20) miteinander über ein Netzwerk (9) verbunden sind, **dadurch gekennzeichnet, dass**
die Dokumentverarbeitungsvorrichtung (10) beinhaltet:
einen Identifikationsinformations-Erzeugungsteil (33) zum Erzeugen von Identifikationsinformationen zum Identifizieren der zu verarbeitenden Dokumentdaten, basierend auf den Dokumentdaten;
einen Programmermittlungsteil (34) zum Übertragen einer Anforderung zur Übertragung, die die Identifikationsinformationen enthält, an die Servervorrichtung (20), und Empfangen des Dokumentverarbeitungsprogramms (22), das zum Verarbeiten nur der Dokumentdaten in der Lage ist, die den Identifikationsinformationen entsprechen, aus der Servervorrichtung (20); und
einen Programmausführteil (35) zum Erzeugen der zu verarbeitenden Dokumentdaten durch Ausführen des Dokumentverarbeitungsprogramms (22), das durch den Programmermittlungsteil (34) erfasst wurde, und
die Servervorrichtung (20) beinhaltet:
einen Programmausführungsbeschränkungsteil (42) zum Erzeugen des Dokumentverarbeitungsprogramms (22), das zum Verarbeiten nur von Dokumentdaten in der Lage ist, die den Identifikationsinformationen entsprechen, basierend auf dem in der Anforderung zur Übertragung beinhalteten Identifikationsinformationen; und
einen Programmübertragungsteil (43) zum Senden des durch den Programmausführungsbeschränkungsteil (42) erzeugten Dokumentverarbeitungsprogramms (22) an die Dokumentverarbeitungsvorrichtung (10).

13. Dokumentverarbeitungssystem gemäß Anspruch 12, wobei der Programmausführungsbeschränkungsteil (42) das Dokumentverarbeitungsprogramm (22) erzeugt, dem eine Ausführung nur einmal in der Dokumentverarbeitungsvorrichtung (10) gestattet ist.

14. Dokumentverarbeitungssystem gemäß Anspruch 13, wobei der Programmausführungsteil (35) das empfangene Dokumentverarbeitungsprogramm (22) nach Verarbeitung der zu verarbeitenden Dokumentdaten durch Ausführen des Dokumentverarbeitungsprogramms (22) löscht.

15. Dokumentverarbeitungssystem gemäß einem der Ansprüche 12 bis 14, wobei gemäß der Übertragung des Dokumentverarbeitungsprogramms (12), das durch den Programmausführungsbeschränkungsteil (42) erzeugt ist, an die Dokumentverarbeitungsvorrichtung (10), die Servervorrichtung (20) eine Abrechnungsverarbeitung an der Dokumentverarbeitungsvorrichtung (10) durchführt.

16. Dokumentverarbeitungssystem gemäß Anspruch 15, wobei die Servervorrichtung (20) weiter umfasst:
einen Speicherteil (23) zum Speichern von Abrechnungsinformationen für das Durchführen des Abrechnungsverarbeitens; und
einen Übertragungsteil zum Übertragen der in der Speichervorrichtung gespeicherten Abrechnungsinformationen an die Dokumentverarbeitungsvorrichtung (10) in Reaktion auf eine Anforderung aus der Dokumentverarbeitungsvorrichtung (10).

## Revendications

1. Dispositif de traitement de document (10) pour télécharger un programme de traitement de document (22) à partir d'un dispositif serveur (20) via un réseau (8, 9) et pour exécuter ledit programme de traitement de document (22), traitant ainsi des données de document à traiter, **caractérisé en ce que** le dispositif de traitement de document (10) comporté :
une partie de génération d'informations d'identification (33) pour générer des informations d'identification afin d'identifier lesdites données de document à traiter sur la base desdites données de document ;
une partie d'acquisition de programme (34) pour transmettre lesdites informations d'identification audit dispositif serveur (20), et pour télécharger ledit programme de traitement de document (22) qui ne peut traiter que lesdites données de document correspondant auxdites informations d'identification provenant dudit dispositif serveur (20) ; et
une partie d'exécution de programme (35) pour traiter lesdites données de document à traiter en exécutant ledit programme de traitement de document (22) acquis par ladite partie d'acquisition de programme (34).

2. Dispositif de traitement de document (10) selon la revendication 1, dans lequel
ladite partie de génération d'informations d'identification (33) génère en outre des informations de document (D12) contenant une dimension de feuille ou le nombre de pages sur la base desdites données de document à traiter, et
ladite partie d'acquisition de programme (34) transmet lesdites informations de document (D12) conjointement avec lesdites informations d'identification audit dispositif serveur (20) et télécharge ledit programme de traitement de document (22) qui ne peut traiter que lesdites données de document correspondant auxdites informations d'identification et auxdites informations de document (D12).

3. Dispositif de traitement de document (10) selon la revendication 1 ou 2, dans lequel ladite partie de génération d'informations d'identification (33) produit une valeur de hachage correspondant à des contenus desdites données de document à traiter comme étant lesdites informations d'identification.

4. Dispositif de traitement de document (10) selon l'une des revendications 1 à 3, dans lequel après l'exécution dudit programme de traitement de document (22) acquis par ladite partie d'acquisition-de programme (34) et le traitement desdites données de document à traiter, ladite partie d'exécution de programme (35) efface ledit programme de traitement de document (22).

5. Dispositif serveur (20) pour transmettre un programme de traitement de document (22) en réponse à une demande de transmission reçue à partir d'un dispositif de traitement de document (10) avec lequel le dispositif serveur est connecté via un réseau (8, 9), **caractérisé en ce que** le dispositif serveur (20) comporte :
une partie de restriction d'exécution de programme (42) pour créer ledit programme de traitement de document qui ne peut traiter que des données de document à traiter correspondant à des informations d'identification pour identifier lesdites données de document sur la base desdites informations d'identification incluses dans ladite demande de transmission ; et
une partie de transmission de programme (43) pour transmettre ledit programme de traitement de document (22) créé par ladite partie de restriction d'exécution de programme (42) audit dispositif de traitement de document (10).

6. Dispositif serveur (20) selon la revendication 5, dans lequel ladite partie de restriction d'exécution de programme (42) crée ledit programme de traitement de document (22) dont l'exécution n'est autorisée qu'une seule fois.

7. Dispositif serveur (20) selon la revendication 5 ou 6, dans lequel ladite partie de restriction d'exécution de programme (42) crée en outre ledit programme de traitement de document (22) qui ne peut traiter que lesdites données de document correspondant à des informations de document (D12) contenant une dimension de feuille ou le nombre de pages sur la base desdites informations de document (D12) incluses dans ladite demande de transmission.

8. Dispositif serveur (20) selon l'une des revendications 5 à 7, comprenant en outre une partie de traitement de facturation (44) pour effectuer un traitement de facturation audit dispositif de traitement de document (10) selon la transmission dudit programme de traitement de document (22) par ladite partie de transmission de programme (43).

9. Dispositif serveur (20) selon la revendication 8, dans lequel ladite partie de traitement de facturation (44) détermine un prix à payer sur la base desdites informations de document (D12) contenant la dimension de feuille ou le nombre de pages incluses dans ladite demande de transmission.

10. Dispositif serveur (20) selon la revendication 9, comprenant en outre :
une partie de stockage (23) pour stocker des informations de facturation afin de déterminer ledit prix à payer ; et
une partie de transmission pour transmettre lesdites informations de facturation stockées dans ladite partie de stockage (23) en réponse à une demande provenant dudit dispositif de traitement de document (10).

11. Dispositif serveur (20) selon l'une des revendications 5 à 10, dans lequel
lesdites informations d'identification sont une valeur de hachage correspondant à des contenus desdites données de document à traiter, et
ladite partie de restriction d'exécution de programme (42) crée ledit programme de traitement de document (22) qui ne peut traiter que lesdites données de document correspondant à ladite valeur de hachage.

12. Système de traitement de document comprenant un dispositif serveur (20) et un dispositif de traitement de document (10) pour télécharger un programme de traitement de document (22) à partir dudit dispositif serveur (20) et pour exécuter ledit programme de traitement de document téléchargé (22), traitant ainsi des données de documents à traiter, ledit dispositif de traitement de document (10) et ledit dispositif serveur (20) étant connectés via un réseau (9), **caractérisé en ce que**
ledit dispositif de traitement de document (10) comporté :
une partie de génération d'informations d'identification (33) pour générer des informations d'identification afin d'identifier lesdites données de document à traiter sur la base desdites données de document ;
une partie d'acquisition de programme (34) pour transmettre une demande de transmission comportant lesdites informations d'identification audit dispositif serveur (20), et pour recevoir ledit programme de traitement de document (22) qui ne peut traiter que lesdites données de document correspondant auxdites informations d'identification provenant dudit serveur dispositif (20) ; et
une partie d'exécution de programme (35) pour traiter lesdites données de document à traiter en exécutant ledit programme de traitement de document (22) acquis par ladite partie d'acquisition de programme (34), et
ledit dispositif serveur (20) comporte :
une partie de restriction d'exécution de programme (42) pour créer ledit programme de traitement de document (22) qui ne peut traiter que des données de document correspondant auxdites informations d'identification sur la base desdites informations d'identification incluses dans ladite demande de transmission ; et
une partie de transmission de programme (43) pour transmettre ledit programme de traitement de document (22) créé par ladite partie de restriction d'exécution de programme (42) audit dispositif de traitement de document (10).

13. Système de traitement de document selon la revendication 12, dans lequel ladite partie de restriction d'exécution de programme (42) crée ledit programme de traitement de document (22) dont l'exécution n'est autorisée qu'une seule fois dans ledit dispositif de traitement de document (10).

14. Système de traitement de document selon la revendication 13, dans lequel ladite partie d'exécution de programme (35) efface ledit programme de traitement de document reçu (22) après le traitement desdites données de document à traiter en exécutant ledit programme de traitement de document (22).

15. Système de traitement de document selon l'une des revendications 12 à 14, dans lequel selon la transmission dudit programme de traitement de document (22) créé par ladite partie de restriction d'exécution de programme (42) audit dispositif de traitement de document (10), ledit dispositif serveur (20) effectue un traitement de facturation audit dispositif de traitement de document (10).

16. Système de traitement de document selon la revendication 15,
ledit dispositif serveur (20) comprenant en outre :
une partie de stockage (23) pour stocker des informations de facturation afin d'effectuer ledit traitement de facturation ; et
une partie de transmission pour transmettre lesdites informations de facturation stockées dans ledit dispositif de stockage audit dispositif de traitement de document (10) en réponse à une demande provenant dudit dispositif de traitement de document (10).
